# EUROPÄISCHE PATENTSCHRIFT

(11) **EP 2 177 555 B1**
(45) Veröffentlichungstag und Bekanntmachung des Hinweises auf die Patenterteilung: **21.11.2018**
(21) Anmeldenummer: 09012547.7
(22) Anmeldetag: 05.10.2009
(51) Int. Cl.: C08G 65/26, C08G 65/332, C08G 18/42, C08G 18/48, C08G 18/50, C08G 18/18, C08L 71/02, C08G 101/00

(54) **Verfahren zur Herstellung von Polyetheresterpolyolen**
Method for manufacturing polyether ester polyols
Procédé de fabrication de polyéther-ester-polyols

(30) Priorität: 16.10.2008 DE 102008051882
(43) Veröffentlichungstag der Anmeldung: 21.04.2010
(73) Patentinhaber: Covestro Deutschland AG, 51373 Leverkusen (DE)
(72) Erfinder: Lorenz, Klaus, Dr., 41539 Dormagen (DE); Albers, Reinhard, Dr., 51375 Leverkusen (DE); Otto, Frank, 40724 Hilden (DE)
(74) Vertreter: Levpat

(56) Entgegenhaltungen:
- EP-A1- 1 923 417

## Beschreibung

Die vorliegende Erfindung betrifft ein Verfahren zur Herstellung von Polyetheresterpolyolen ausgehend von Fettsäureestern und Starterverbindungen mit Zerewitinoff-aktiven Wasserstoffatomen, Polyole basierend auf erneuerbaren Rohstoffen, wie beispielsweise Fettsäuretriglyceriden, Zucker, Sorbitol, Glycerol und Dimeren von Fettsäurealkoholen werden bereits auf vielfache Weise als Ausgangsprodukte zur Herstellung von Materialien basierend auf Polyurethan verwendet. Es wird erwartet, dass die Verwendung solcher Verbindungen in der Zukunft weiter zunehmen wird, da Produkte aus regenerativen Quellen einen positiven Einfluss auf die Ökobilanz besitzen und gleichzeitig die Verfügbarkeit von Rohstoffen auf petrochemischer Basis mittel- bis langfristig abnehmen wird.

Einer verstärkten Verwendung von Zucker, Glycerol und Sorbitol sowie von Oligo- oder Polysacchariden als Polyolkomponenten in Polyurethanformulierungen stehen deren geringe Löslichkeiten in anderen Polyether- oder Polyesterpolyolen, die konventionell in der Polyurethanchemie verwendet werden, entgegen. Darüber hinaus verleihen diese Substanzen, selbst wenn sie in geringen Mengen verwendet werden, der Polyolkomponente sehr hohe OH-Zahlen, da sie eine Vielzahl von Hydroxylgruppen aufweisen.

Fettsäuretriglyceride werden in großen Mengen aus regenerierbaren Quellen erhalten und bilden daher nach der Lehre der EP 1923417 A1 eine günstige Basis für Polyurethanrohstoffe. In Formulierungen zur Herstellung von Hartschäumen zeichnet sich diese Klasse von Verbindungen durch eine hohe Aufnahmekapazität für Treibmittel auf Basis von Kohlenwasserstoffen aus.

Pentaerythrit, Zucker, bzw. andere Oligo- und Polysaccharide und Zuckeralkohole wie Mannit oder Sorbit weisen in der Regel Schmelzpunkte auf, die oberhalb der Reaktionstemperatur für die Herstellung von Polyetheresterpolyolen liegen oder zersetzen sich vor Erreichen der Schmelztemperatur. Sofern diese Starterverbindungen nach dem Verfahren der EP 1923417 A1 gemeinsam mit Fettsäureestern für die Alkoxylierung mit Alkylenoxiden genutzt werden, gestaltet sich das Anfahren der Reaktion schwierig, da sich die Starterverbindungen zu Beginn der Alkylenoxiddosierphase im Reaktionsgemisch nur schwer lösen. Auf diese Weise erhöht sich der Druck im Reaktor und die sicherheitstechnischen Druckgrenzen des Reaktors können leicht überschritten werden. Um einen sicheren Reaktionsverlauf zu gewährleisten, müssen daher die Alkylenoxide sehr langsam oder mit Unterbrechungen zu dem Reaktionsgemisch dosiert werden.

Eine Aufgabe der vorliegenden Erfindung war es daher, ein Verfahren zur Herstellung von Polyetheresterpolyolen zur Verfügung zu stellen, das eine glatte Aufnahme der dosierten Alkylenoxide gewährleistet und diese damit kontinuierlich zugegeben werden können. Insbesondere soll sich dieses Verfahren zur Herstellung von Polyetheresterpolyolen auf Basis von Starterverbindungen mit einem Schmelzpunkt oberhalb der üblichen Reaktionstemperatur, d. h. mit einem Schmelzpunkt oberhalb von 100 °C, bzw. zur Herstellung von Polyetheresterpolyolen auf Basis von bei der üblichen Reaktionstemperatur zur Zersetzung neigenden Starterverbindungen eignen.

Die kontinuierliche Dosierung der Alkylenoxide soll dabei so erfolgen, dass die sicherheitstechnischen Druckgrenzen nicht überschritten werden. Diese richten sich naturgemäß nach den im Einzelfall vorliegenden apparativen Gegebenheiten, bevorzugt wird der Prozess im Allgemeinen in einem Druckbereich zwischen 1 mbar und 10 bar ausgeführt, besonders bevorzugt ist der Druckbereich von 1 mbar bis 4 bar.

Eine weitere Aufgabe der vorliegenden Erfindung war es, die vorstehend genannten Aufgaben zu lösen und gleichzeitig die vorteilhaften Eigenschaften der aus dem Stand der Technik bekannten Verfahren zur gemeinsamen Umsetzung von Fettsäureestern und Alkylenoxiden mit Starterverbindungen beizubehalten. Insbesondere soll sichergestellt werden, dass die Fettsäureester vollständig in die gebildeten Polyetheresterpolyole eingebaut werden. Darüber hinaus sollen die nach dem erfindungsgemäßen Verfahren hergestellten Polyetheresterpolyole zur Herstellung von Polyurethanhartschaumformulierungen geeignet sein, mit denen sich schnell entformbare Hartschäume erhalten lassen. Darüber hinaus sollen die nach dem erfindungsgemäßen Verfahren erhältlichen Polyetheresterpolyole die Aufnahmekapazität der Schaumstoffformulierungen für Treibmittel basierend auf Kohlenwasserstoffen verbessern.

Eine weitere Aufgabe der vorliegenden Erfindung war es, ein Verfahren zur Herstellung von Polyetheresterpolyolen zur Verfügung zu stellen, bei dem die Starterverbindungen mit Zerewitinoff-aktiven Wasserstoffatomen möglichst vollständig in das Polyetheresterpolyol eingebaut werden, insbesondere sollen mehr als 99 Gew.-% der Starterverbindungen in das Polyetheresterpolyol eingebaut werden.

Die vorstehend genannten Aufgaben werden gelöst durch ein Verfahren zur Herstellung von Polyetheresterpolyolen, wobei Starterverbindungen mit Zerewitinoff-aktiven Wasserstoffatomen (a) mit wenigstens einem Alkylenoxid (b) in Gegenwart von wenigstens einem Amin (c) ausgewählt aus der Gruppe bestehend aus tertiären Aminen, unsubstituiertem Imidazol und substituiertem Imidazol, in Gegenwart von wenigstens einem Fettsäureester (d) umgesetzt werden, wobei die Zugabe von (d) vor, während oder nach der Dosierung von (b) erfolgt und vor der Dosierung der Komponente (b) ein Polyetheresterpolyol (e) in Mengen von 3,0 bis 20,0 Gew.-% bezogen auf alle Komponenten (a), (b), (c), (d) und (e) mit den Komponenten (a), (c) und ggf. (d) vermischt wird, wobei das Polyetherersterpolyol (e) eine OH-Zahl im Bereich von 150 und 1150 mg KOH / g aufweist. Sofern die Zugabe von (d) nach Dosierung von (b) erfolgt, wird immer auch ein bestimmter Gewichtsanteil von (d) vor oder während der Dosierung von (b) zugegeben. Die Zugabe von (d) kann in einer Portion oder portionsweise, d. h. als 2, 3, 4 oder mehr Portionen erfolgen

Bei der Komponente (e) handelt es sich bevorzugt um das nach dem erfindungsgemäßen Verfahren erhältliche Polyetheresterpolyol selbst oder um über ein Verfahren nach EP-A 1 923 417 erhältliches Polyetheresterpolyol.

Das erfindungsgemäße Verfahren ermöglicht die zügige und kontinuierliche Zugabe von Alkylenoxiden (b), ohne dass aufgrund der Überschreitung der sicherheitstechnischen Druckgrenzen des Reaktors die Alkylenoxiddosierung unterbrochen werden muss.

Bevorzugt wird das Polyetheresterpolyol (e) in Mengen von 3,0 bis 20,0 Gew.-%, besonders bevorzugt in Mengen von 5,0 bis 15,0 Gew.-% bezogen auf alle Komponenten (a), (b), (c), (d) und (e) eingesetzt.

Bevorzugt liegt das Mengenverhältnis der Starterverbindungen (a) zu dem Polyetheresterpolyol (e) im Bereich zwischen 1,0 und 5,0 besonders bevorzugt im Bereich zwischen 2,0 und 5,0.

Bevorzugt weisen die Starterverbindungen (a) einen Schmelzpunkt im Bereich von 60 °C bis 400 °C, besonders bevorzugt im Bereich zwischen 80°C und 300 °C, ganz besonders bevorzugt im Bereich zwischen 95 °C und 280 °C, auf, bzw. zersetzen sich diese Verbindungen in diesen Temperaturbereichen.

Bevorzugt wird die Komponente (a) ausgewählt aus der Gruppe bestehend aus Saccharose, Pentaerythrit, Sorbit, Trimethylolpropan, Bisphenol F, Bisphenol A, 1,3,5-Trihydroxybenzol, Isomere von Diaminotoluol, Isomere von Diaminodiphenylmethan, methylolgruppenhaltige Kondensate aus Formaldehyd und Phenol oder Melamin oder Harnstoff sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Die Komponente (a) kann dabei als Mischung der vorstehend genannten Verbindungen eingesetzt werden. Besonders bevorzugt sind als Komponenten (a) Sorbitol und Saccharose oder ein Gemisch dieser Verbindungen.

Bevorzugt weisen die Starterverbindungen (a) Funktionalitäten im Bereich von 2 bis 35 auf, besonders bevorzugt im Bereich von 2 bis 8. Bevorzugt werden die Starterverbindungen (a) in Mengen von 5 bis 60 Gew.-%, besonders bevorzugt von 10 bis 50 Gew.-%, bezogen auf alle Komponenten (a), (b), (c), (d) und (e) eingesetzt.

Natürlich können auch leichter schmelzbare bzw. flüssige Zerewitinoff-aktive Wasserstoffatome enthaltende Verbindungen als Costarter verwendet werden, d. h. diese Verbindungen sind zusätzlich zu der Komponente (a) vorhanden. Beispiele sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Triethanolamin, Hydrochinon, Brenzcatechin und Resorcin. Beispiele für weitere aminogruppenhaltige Starter bzw. Costarterverbindungen sind Ammoniak, Ethanolamin, Diethanolamin, Isopropanolamin, Diisopropanolamin, Ethylendiamin, Hexamethylendiamin, Anilin, die Isomere des Toluidins, sowie bei der Kondensation von Anilin mit Formaldehyd zu Diaminodiphenylmethan anfallende höherkernige Produkte. Außerdem können als Starter- bzw Costarterverbindungen auch Ringöffnungsprodukte aus cyclischen Carbonsäureanhydriden und Polyolen eingesetzt werden. Beispiele sind Ringöffnungsprodukte aus Phthalsäureanhydrid, Bernsteinsäureanhydrid, Maleinsäureanhydid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbitol andererseits. Die Starter- bzw. Costarterverbindungen können in beliebigen Gemischen in dem erfindungsgemäßen Verfahren eingesetzt werden.

An N, O oder S gebundener Wasserstoff wird als Zerewitinoff-aktiver Wasserstoff (manchmal auch nur als "aktiver Wasserstoff") bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten.

Bevorzugt wird die Komponente (b) ausgewählt aus der Gruppe bestehend aus Ethylenoxid, Propylenoxid, 1,2-Butylenoxid, 2,3-Butylenoxid und Styroloxid. Besonders bevorzugt ist als Komponente (b) Ethylenoxid, Propylenoxid oder eine Mischung von Propylenoxid und Ethylenoxid. Ganz besonders bevorzugt ist als Komponente (b) Propylenoxid. Die Alkylenoxide (b) können dem Reaktionsgemisch einzeln, im Gemisch oder nacheinander zugeführt werden. Werden die Alkylenoxide nacheinander dosiert, so enthalten die hergestellten Polyetheresterpolyole Polyetherketten mit Blockstrukturen. Produkte mit Ethylenoxidendblöcken sind beispielsweise durch erhöhte Konzentration an primären Endgruppen gekennzeichnet, welche dem System eine erhöhte Reaktivität gegenüber Isocyanaten verleihen. Die verwendeten Alkylenoxide (b) werden im Hinblick auf die gewünschten Eigenschaften des angestrebten Endprodukts, d. h. des herzustellenden Polyurethan-Werkstoffs, ausgewählt.

Bevorzugt werden die Alkylenoxide (b) in Mengen von 5 bis 85 Gew.-%, besonders bevorzugt in Mengen von 15 bis 75 Gew.-%, bezogen auf alle Komponenten (a), (b), (c), (d) und (e) eingesetzt.

Eine umfassende Übersicht für als Komponente (c) verwendbare Amine ist von M. Ionescu et al. in "Advances in Urethanes Science and Technology", 1998, 14, S. 151-218 gegeben worden. Bevorzugt wird Komponente (c) ausgewählt aus der Gruppe bestehend aus N,N-Dimethylbenzylamin, Dimethylaminoethanol, Dimethylaminopropanol, N-Methyl-diethanolamin, Trimethylamin, Triethylamin, N,N-Dimethylcyclohexylamin, N-Methylpyrrolidin, N,N,N',N'-Tetramethylethylendiamin, Diazabicyclo[2,2,2]octan, 1,4-Dimethylpiperazin, N-Methylmorpholin, unsubstituiertes Imidazol und alkylsubstituierte Imidazolderivate. Besonders bevorzugt ist als Komponente (c) unsubstituiertes Imidazol. Die Komponente (c) wird in einer Konzentration von 200 ppm bis 10.000 ppm, besonders bevorzugt in einer Konzentration von 200 ppm bis 5.000 ppm, bezogen auf alle Komponenten (a), (b), (c), (d) und (e) eingesetzt.

Bevorzugt werden in dem erfindungsgemäßen Verfahren keine Alkalimetallhydroxide, Alkalimetallhydride, Alkalimetallcarboxylate oder Erdakalihydroxide als Katalysatoren eingesetzt. Bevorzugt werden in dem erfindungsgemäßen Verfahren ausschließlich Katalysatoren auf Aminbasis, ausgewählt aus der Gruppe bestehend aus tertiären Aminen, unsubstituiertem Imidazol und substituiertem Imidazol eingesetzt.

Im Sinne der vorliegenden Erfindung bezeichnet der Ausdruck "Fettsäureester" Fettsäureglyceride, insbesondere Fettsäuretriglyceride und/oder Fettsäureester basierend auf mono- und polyfunktionellen Alkoholen. Die Fettsäureradikale der vorstehend genannten Fettsäureester können wiederum, wie beispielsweise im Fall von Rizinusöl, Hydroxylgruppen tragen. Es ist ebenfalls möglich, Fettsäureester zu verwenden, deren Fettsäureradikale durch die Einführung von Hydroxylgruppen modifiziert wurden. Diese Fettsäureradikale können beispielsweise durch Epoxidierung der Doppelbindung und anschließende Ringöffnung des Oxiranrings mit Hilfe von Nukleophilen oder durch eine Reaktionssequenz von Hydroformulierung und Hydrierung erhalten werden. Zur Einführung von Hydroxylgruppen in ungesättigte Fettsäureester wird oft ebenfalls Sauerstoff bei höheren Temperaturen verwendet.

Alle im Stand der Technik bekannten Triglyceride können in dem erfindungsgemäßen Verfahren verwendet werden. Beispielhaft genannt seien Baumwollsaatöl, Erdnussöl, Kokosöl, Leinöl, Palmkernöl, Olivenöl, Maisöl, Palmöl, Jatrophaöl, Rizinusöl, Lesquerella-Öl, Rapsöl, Sojaöl, Sonnenblumenöl, Heringsöl, Sardinenöl und Talg. Natürlich können auch Fettsäureester anderer mono- oder mehrfunktioneller Alkohole, sowie Fettsäureglyceride mit weniger als drei Fettsäuren pro Glycerinmolekül im erfindungsgemäßen Verfahren eingesetzt werden. Die Fettsäure(tri)glyceride und die Fettsäureester anderer mono- und mehrfunktioneller Alkohole können auch im Gemisch eingesetzt werden.

Bevorzugt können in dem erfindungsgemäßen Verfahren als Komponente (d) Fettsäuretriglyceride bzw. Fettsäureester ohne Hydroxylgruppen in den Fettsäureestern, wie beispielsweise die Ester bzw. Triglyceride der Laurin-, Myristin-, Palmitin-, Stearin-, Palmitolein-, Öl-, Eruka-, Linol-, Linolen-, Elaeostearin- oder Acharidonsäure oder deren Gemische in die gewünschten Polyetheresterpolyole überführt werden.

Besonders bevorzugt werden als Komponente (d) Rapsöl, Sojaöl oder Jatrophaöl verwendet.

Die Komponente (d) wird in dem erfindungsgemäßen Verfahren bevorzugt in Mengen von 5 bis 80 Gew.-%, besonders bevorzugt in Mengen von 20 bis 60 Gew.-%, bezogen auf alle Komponenten (a), (b), (c), (d) und (e) eingesetzt.

Das Polyetheresterpolyol (e) weist eine OH-Zahl im Bereich zwischen 150 und 1150 mg KOH / g, besonders bevorzugt im Bereich zwischen 200 und 1000 mg KOH / g, auf.

Bevorzugt besitzt die Polyetheresterpolyol-Komponente (e) die gleichen physikalischen Eigenschaften, d. h. die gleiche Viskosität und die gleiche OH-Zahl, wie das nach dem erfindungsgemäßen Verfahren herzustellende Polyetheresterpolyol.

Ebenfalls bevorzugt handelt es sich bei der Polyetheresterpolyol-Komponente (e) um das nach dem erfindungsgemäßen Verfahren erhältliche Polyetheresterpolyol selbst.

Im Polyetheresterpolyol, das nach dem erfindungsgemäßen Verfahren hergestellt wurde, können bis zu 1,0 Gew.-% der Komponente (a) bezogen auf die ursprünglich eingesetzte Menge der Komponente (a) unreagiert zurückbleiben.

In einer bevorzugten Ausführungsform erfolgen die Dosierung der Komponente (b) und die Zugabe der Komponente (d) gleichzeitig.

In einer weiteren bevorzugten Ausführungsform erfolgt zunächst die Dosierung der Komponente (b) in Mengen von 10 bis 70 Gew.-% bezogen auf die Gesamtmenge der zu dosierenden Komponente (b) anschließend die Zugabe der Komponente (d) und daraufhin die Dosierung der restlichen Komponente (b) in Mengen von 30 bis 90 Gew.-% bezogen auf die Gesamtmenge der zu dosierenden Komponente (b).

In einer bevorzugten Ausführungsform wird der erfindungsgemäße Prozess wie folgt ausgeführt: Die Komponenten (a), (c) und (e) werden in einen Reaktor eingeführt und mit Alkylenoxiden (b) unter Inertgasatmosphäre bei einer Temperatur im Bereich zwischen 80 und 170°C, bevorzugt im Bereich zwischen 100 und 130°C umgesetzt, wobei die Alkylenoxide (b) dem Reaktor kontinuierlich zudosiert werden. Anschließend erfolgt die Zugabe der Komponente (d) und die weitere Dosierung von Alkylenoxiden (b) unter Inertgasatmosphäre bei einer Temperatur von 80 bis 170°C, besonders bevorzugt bei einer Temperatur zwischen 100 und 130°C. Die Reaktionstemperatur kann während der Alkylenoxiddosierphase natürlich innerhalb der beschriebenen Grenzen variiert werden: Um eine optimale Abstimmung zwischen hohem Epoxidumsatz und geringer Nebenproduktbildung zu erreichen, können das Alkylenoxid / die Alkylenoxide (b) beispielsweise im Bereich relativ niedriger Molmassen bei hohen Temperaturen, im Bereich hoher Molmassen bei niedrigeren Temperaturen dosiert werden und Nachreaktionen wiederum bei höheren Temperaturen durchgeführt werden. In ähnlicher Weise ist es möglich, empfindliche Starterverbindungen, wie beispielsweise Saccharose, zunächst bei niedrigen Reaktionstemperaturen zu alkoxylieren, und erst bei hinreichendem Starterumsatz zu höheren Reaktionstemperaturen überzugehen. Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z.B. Ullmann's Encyclopedia of Industrial Chemistry, vol B4, pp 167ff, 5th ed, 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern. Diese sollten so ausgelegt sein, dass auch zu Beginn der Dosierphase, d. h. bei kleinem Füllstand, effektiv gekühlt werden kann.

Generell ist in allen Reaktionsphasen durch Auslegung und Einsatz handelsüblicher Rührorgane für eine gute Durchmischung des Reaktorinhaltes zu sorgen, wobei hier insbesondere ein- oder mehrstufig angeordnete Rührer oder großflächig über die Füllhöhe wirkende Rührertypen geeignet sind (s. z.B. Handbuch Apparate; Vulkan-Verlag Essen, 1. Aufl. (1990), S.188 - 208). Besonders technisch relevant ist hierbei eine im Mittel über den gesamten Reaktorinhalt eingetragene volumenspezifische Mischleistung im Allgemeinen im Bereich von 0,2 bis 5 W/1 mit entsprechend höheren volumenspezifischen lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik eine Kombinationen aus Stromstörern (z. B Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn bei der Verwendung von Saccharose vorliegen können, besonders intensiv zu durchmischen. Außerdem ist beim Einsatz fester Starter durch die Wahl des Rühraggregates sicherzustellen, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten, wie beispielsweise nach Ende der Dosier- und Nachreaktionsphase bei der Abtrennung von Restepoxiden im Vakuum, beitragen. Hierbei haben sich Rührorgane als geeignet herausgestellt, die eine kontinuierliche Durchmischung der Flüssigkeitsoberfläche erzielen. Je nach Anforderung weist die Rührwelle ein Bodenlager und ggf. weitere Stützlager im Behälter auf.. Der Antrieb der Rührerwelle kann dabei von oben oder unten erfolgen (mit zentrischer oder exzentrischer Anordnung der Welle).

Alternativ ist es natürlich auch möglich die notwendige Durchmischung ausschließlich über einen über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1-50 mal pro Stunde) umgepumpt wird.

Die kontinuierliche Dosierung des Alkylenoxides / der Alkylenoxide (b) erfolgt in den beiden Schritten so, dass die sicherheitstechnischen Druckgrenzen nicht überschritten werden. Diese richten sich naturgemäß nach den im Einzelfall vorliegenden apparativen Gegebenheiten, bevorzugt wird der Prozess im Allgemeinen in einem Druckbereich zwischen 1 mbar und 10 bar ausgeführt, besonders bevorzugt ist der Druckbereich von 1 mbar bis 4 bar. Insbesondere bei der Dosierung von ethylenoxidhaltigen Alkylenoxidgemischen oder reinem Ethylenoxid ist darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Das Alkylenoxid / die Alkylenoxide kann / können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Wird ein Alkylenoxidgemisch dosiert, können die jeweiligen Alkylenoxide dem Reaktor separat oder als Mischung zugeführt werden. Eine Vorvermischung der Alkylenoxide kann beispielsweise durch ein in der gemeinsamen Dosierstrecke befindliches Mischaggregat erreicht werden ("inline-blending"). Es hat sich auch bewährt Alkylenoxide pumpendruckseitig in den Umpumpkreislauf einzeln oder vorgemischt zu dosieren. Für die gute Durchmischung mit dem Reaktionsmedium ist es dann von Vorteil, ein hochscherendes Mischaggregat, in den Alkylenoxid- / Reaktionsmediumstrom zu integrieren. Nach Ende der Dosierung der Komponente (b) schließt sich eine Nachreaktion an, deren Ende erreicht ist, sobald kein weiterer Druckabfall im Reaktionskessel mehr beobachtet wird. Gegebenenfalls können Restepoxidgehalte danach auch noch durch einen Vakuum-, Inertgas- oder Dampfstrippschritt entfernt werden.

Generell sind die unterschiedlichsten Reaktortypen für die Durchführung des erfindungsgemäßen Verfahrens geeignet. Im Allgemeinen werden zylinderförmige Behälter eingesetzt, welche ein Höhen- / Durchmesserverhältnis von 1:1 bis 10:1 besitzen. Als Reaktorböden kommen beispielsweise Kugel-, Klöpper-, Flach,- oder Konusböden in Frage.

Den erfindungsgemäß hergestellten Polyetheresterpolyolen können Antioxidanzmittel z. B. auf Basis von Phenolderivaten und / oder auf Basis von Aminen zugesetzt werden.

Die nach dem erfindungsgemäßen Verfahren erhältlichen Polyetheresterpolyole können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten.

Zur Herstellung dieser Materialien werden
1. die erfindungsgemäß hergestellten Polyetheresterpolyole gegebenenfalls mit weiteren isocyanatreaktiven Komponenten gemischt und mit
2. organischen Polyisocyanaten,
3. gegebenenfalls in Gegenwart von Treibmitteln,
4. in Gegenwart von Katalysatoren
5. gegebenenfalls in Gegenwart anderer Zusatzstoffe wie z. B. Zellstabilisatoren zur Reaktion gebracht.

Den erfindungsgemäß hergestellten Polyetheresterpolyolen können gegebenenfalls als weitere isocyanatreaktive Komponenten Polyetherpolyole, Polyesterpolyole, Polycarbonatpolyole, Polyethercarbonatpolyole, Polyestercarbonatpolyole, Polyetherestercarbonatpolyole und/oder niedermolekulare Kettenverlängerungs- und/oder Vernetzungsmittel mit OH-Zahlen bzw. NH-Zahlen von 6 bis 1870 mg KOH/g beigemischt werden.

Hierfür geeignete Polyetherpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 Zerewitinoff-aktive Wasserstoffatome gebunden enthält, oder durch kationische Polymerisation von Alkylenoxiden in Gegenwart von Lewis-Säuren wie Antimonpentachlorid oder Borfluorid-Etherat erhalten werden. Geeignete Katalysatoren sind natürlich auch solche vom Doppelmetallcyanidkomplextyp, wie sie beispielsweise in US-A 3 404 109, US-A 3 829 505, US-A 3 941 849, US-A 5 158 922, US-A 5 470 813, EP-A 700 949, EP-A 743 093, EP-A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind Tetrahydrofuran als lewissauer polymerisierbarer cyclischer Ether und Wasser als Startermolekül. Die Polyetherpolyole, vorzugsweise Polyoxypropylen-polyoxyethylen-polyole, besitzen vorzugsweise zahlenmittlere Molmassen von 200 bis 8000 Da. Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen hergestellt werden, sowie Polyetherpolyol-Dispersionen, die als disperse Phase, üblicherweise in einer Menge von 1 bis 50 Gew.-%, vorzugsweise 2 bis 25 Gew.-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäuremono und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Gew.-Teilen und insbesondere Adipinsäure. Beispiele für zwei- und mehrwertige Alkohole sind Ethandiol, Diethylenglykol, 1,2-bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten mehrwertigen Alkohole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300°C, vorzugsweise 180 bis 230°C gegebenenfalls unter vermindertem Druck bis zu den gewünschten Säure- und OH-Zahlen, polykondensiert werden. Die Säurezahl ist vorteilhafterweise kleiner als 10, vorzugsweise kleiner als 2,5.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie α-ω-Bischloroformiaten oder Phosgen hergestellt werden können.

Niedermolekulare difunktionelle Kettenverlängerungsmittel und/oder niedermolekulare, vorzugsweise tri- oder tetrafunktionelle Vernetzungsmittel können Polyetheresterpolyolen zur Modifizierung der mechanischen Eigenschaften, insbesondere der Härte der PUR-Werkstoffe beigemischt werden. Geeignete Kettenverlängerungsmittel wie Alkandiole, Dialkylenglykole und Polyalkylen-polyole und Vernetzungsmittel, z.B. 3- oder 4-wertige Alkohole und oligomere Polyalkylen-polyole mit einer Funktionalität von 3 bis 4, besitzen üblicherweise Molekulargewichte < 800, vorzugsweise von 18 bis 400 und insbesondere von 60 bis 300 Da. Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykolester oder Terephthalsäure-bis-1,4-butylenglykolester und Hydroxyalkylenether des Hydrochinons oder Resorcins, z.B. 1,4-Di-(β-hydroxyethyl)-hydrochinon oder 1,3-(β-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Disec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.butyl-, N,N'-Dicyclohexyl-4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin verwendet werden. Geeignete Vernetzungsmittel sind beispielsweise Glycerin, Trimethylolpropan oder Pentaerythrit.

Verwendbar sind auch Gemische unterschiedlicher Kettenverlängerungs- und Vernetzungsmittel untereinander sowie Gemische aus Kettenverlängerungs- und Vernetzungsmitteln.

Geeignete organische Polyisocyanate sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel Q(NCO)ₙ in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und - 1,4-diisocyanat sowie beliebige Gemische dieser Isomeren, 1-Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und - 1,4-phenylen-diisocyanat, Perhydro-2,4'- und -4,4'-diphenyl-methan-diisocyanat, 1,3- und 1,4-Phenylendiisocyanat (DE-A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diisocyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB-A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US-A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in US-A 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der Polyetheresterpolyole und / oder einer Teil- oder der Gesamtmenge der den Polyetheresterpolyolen ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 0,05 bis 40,0 Gew.-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also den Polyetheresterpolyolen und/oder Polyetherpolyolen, Polyesterpolyolen oder Polycarbonatpolyolen mit den Polyisocyanaten, vorzugsweise 4,4'-MDI, 2,4-TDI und/oder 1,5-NDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PUR-Werkstoffe zuzufügen.

Als gegebenenfalls einzusetzendes Treibmittel kann Wasser verwendet werden, das mit den organischen Polyisocyanaten oder mit den Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Gew.-%, bezogen auf das Gewicht der Komponenten 1, 4 und 5 verwendet.

Als Treibmittel können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafterweise einen Siedepunkt unter Normaldruck im Bereich von -40 bis 120 °C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluormethan, HFKWs wie R 134a, R 245fa und R 365mfc, ferner unsubstituierte Alkane wie Butan, n-Pentan, Isopentan, Cyclopentan, Hexan, Heptan oder Diethylether verwendet werden. Diese Treibmittel können auch als Gemische verwendet werden. Als anorganische Treibmittel kommen z.B. Luft, CO₂ oder N₂O in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Weitere Beispiele für Treibmittel, Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-510 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten PUR-Werkstoffdichte und der eingesetzten Wassermenge. Die erforderlichen Mengen können experimentell leicht ermittelt werden. Zufriedenstellende Ergebnisse liefern üblicherweise Feststoffmengen von 0,5 bis 35 Gew.-Teilen, vorzugsweise 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten 1 und 2. Die Gasbeladung mit z. B. Luft, Kohlendioxid, Stickstoff und/oder Helium kann entweder über die Formulierungskomponenten 1, 4 und 5 oder über die Polyisocyanate 2 bzw. über 1, 4, 5 einerseits und 2 andererseits erfolgen.

Als Komponente 4 können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoalkyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-ß-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B10 30 558, DE-A 18 04 361 und 26 18 280) sowie Amidgruppen (vorzugsweise Formamidgruppen) aufweisende tertiäre Amine gemäß DE-A 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol oder alkylsubstituierten Phenolen, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyltetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren eingesetzt, so ist natürlich zu beachten, dass die erfindungsgemäß unter Amin-Katalyse hergestellte Polyetheresterpolyole bereits gegebenenfalls katalytisch aktive Amine enthalten. Durch geeignete Versuchsreihen ist es dem Fachmann jedoch leicht möglich, die Mengen gegebenenfalls noch zuzusetzender Aminkatalysatoren zu ermitteln.

Des Weiteren können als Katalysatoren für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinn-mercaptid (US-A 3 645 927) Verwendung finden.

Katalysatoren, welche die Trimerisierung von NCO-Gruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 450 hergestellt, wobei die Kennzahl als das mit dem Faktor 100 multiplizierte Verhältnis von Isocyanatgruppen zu Hydroxygruppen definiert ist. Katalysatoren, die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren bzw. Katalysatorkombinationen werden in der Regel in einer Menge zwischen etwa 0,001 und 10 Gew.-%, insbesondere 0,01 bis 4 Gew.-% bezogen auf die Gesamtmenge an Verbindungen mit mindestens zwei gegenüber Isocyanaten reaktionsfähigen Wasserstoffatomen eingesetzt.

In Abwesenheit von Feuchtigkeit und physikalisch oder chemisch wirkenden Treibmitteln können auch kompakte PUR-Werkstoffe, z. B. PUR-Elastomere oder PUR-Gießelastomere hergestellt werden.

Bei der Herstellung der kompakten oder geschäumten PUR-Werkstoffe können gegebenfalls Zusatzstoffe 5 mitverwendet werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z.B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente 1 angewandt. Zugesetzt werden können auch Reaktionsverzögerer z.B. sauer reagierende Stoffe wie Salzsäure, oder organische Säuren und Säurehalogenide, sowie Pigmente oder Farbstoffe und an sich bekannte Flammschutzmittel, z.B. Tris-(chlorethyl)phosphat, Trikresylphosphat oder Ammoniumphosphat und -polyphosphat, ferner Stabilisatoren gegen Alterungs- und Witterungseinflüsse, Weichmacher und fungizid und bakterizid wirkende Substanzen. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Zur Herstellung der PUR-Werkstoffe kann das Mengenverhältnis der Isocyanatgruppen in den Polyisocyanaten 2. zu den gegenüber den Isocyanaten reaktiven Wasserstoffen in den Komponenten 1, 3, 4 und 5 stark variiert werden. Üblich sind Verhältnisse von 0,7:1 bis 5:1.

Die PUR-Werkstoffe können nach den in der Literatur beschriebenen Verfahren, z.B. dem oneshot- oder dem Prepolymer-Verfahren, mit Hilfe von dem Fachmann im Prinzip bekannten Mischvorrichtungen hergestellt werden. Die nach dem erfindungsgemäßen Verfahren besonders vorteilhaft herstellbaren hochfunktionellen Polyetheresterpolyole können mit Polyisocyanaten und ggf. zu verwendenden physikalischen Treibmitteln unter Einsatz der üblichen Hochdruck- bzw. Niederdruckverarbeitungsmaschinen insbesondere zu harten Polyurethanisolierschaumstoffen, die beispielsweise bei der Dämmung von Kältegeräten oder Gebäuden Einsatz finden, verarbeitet werden. Die erfindungsgemäß hergestellten Polyetheresterpolyole können hierbei dem maschinellen Mischaggregat entweder als Einzelkomponente oder als Bestandteil einer vorab hergestellten Formulierung zugeführt werden.

### Beispiele für die erfindungsgemäße Herstellung der Polyetheresterpolyole

### Eingesetzte Rohstoffe:

### Sojaöl:

Sojaöl (raffiniert, d. h. entlecithiniert, neutralisiert, entfärbt und dampfgestrippt), bezogen von der Sigma-Aldrich Chemie GmbH, München.

### Irganox® 1076:

### Octadecyl-3 -(3,5 -di-tert.butyl-4-hydroxyphenyl)propionat

### Herstellung des polymeren Alkoxylates:

1190,2 g Glycerin und 58,8 g einer wässrigen KOH-Lösung (enthaltend 45 Gew.-% KOH) wurden bei 60°C in einem 10 1 Autoklaven zusammengegeben. Unter Rühren (450 U / min) wurde bei 108°C im Vakuum entwässert, bis ein Druck kleiner 10 mbar erreicht war. Bei 110°C wurden sodann 4141,1 g Propylenoxid so eindosiert, dass ein Gesamtdruck von 3 bar nicht überschritten wurde. Nach einer Nachreaktionszeit von 80 min. bei 110°C wurde das Reaktionsgemisch bei ebenfalls 110°C 30 min. im Vakuum ausgeheizt. Der Reaktorinhalt wurde auf 80°C abgekühlt und es wurden 550,8 g einer wässrigen KOH-Lösung (enthaltend 45 Gew.-% KOH) zugegeben. Es wurde im Vakuum bei 110°C entwässert, bis ein Druck kleiner 10 mbar erreicht war. Das alkalische Polymerisat hatte eine Alkalizahl von 49,6 mg KOH/g und einen Alkoxylatgehalt von 12,6 Äquivalenz-%. Unter Alkoxylatgehalt ist der durch die KOH durch Deprotonierung entfernte Anteil zerewitinoff-aktiver Wasserstoffatome an allen zerewitinoff-aktiven Wasserstoffatomen im polymeren Alkoxylat zu verstehen.

### Beispiel A (Vergleich)

795 g einer 70 gew.-%igen Lösung von Sorbit in Wasser und 1046 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 2127,3 g Sojaöl und 9 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 2271 g Propylenoxid wurden über einen Zeitraum von 5,65 h und Rühren mit 450 U / min. eindosiert. Nach einer Nachreaktionszeit von 2,58 h wurde das Produkt 0,5 h im Vakuum bei 110 °C ausgeheizt, nach Abkühlen auf 80 °C wurden 3 g Irganox® 1076 zugegeben. Die OH-Zahl des Produktes betrug 386 mg KOH/g und die Viskosität bei 25°C 23800 mPas. 5,1 % der eingesetzten Saccharosemenge blieben unreagiert zurück.

### Beispiel B (Vergleich)

796 g einer 70 gew.-%igen Lösung von Sorbit in Wasser und 1048,7 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 2129,2 g Sojaöl und 8,95 g Imidazol zugegeben. Luft wurde gegen Stickstoff durch dreimaliges Aufdrücken von Stickstoff auf 5 bar und anschließendes Entspannen auf Normaldruck ausgetauscht. Die Temperatur wurde auf 110 °C erhöht und ein Gemisch aus 1135,3 g Propylenoxid und 1135,5 g Ethylenoxid wurde über einen Zeitraum von 5,4 h und Rühren mit 450 U / min. eindosiert. Nach einer Nachreaktionszeit von 3,13 h wurde das Produkt 0,5 h im Vakuum bei 110 °C ausgeheizt, nach Abkühlen auf 80 °C wurden 3 g Irganox® 1076 zugegeben. Die OH-Zahl des Produktes betrug 400 mg KOH/g und die Viskosität bei 25°C 14560 mPas. 5,2 % der eingesetzten Saccharosemenge blieben unreagiert zurück.

### Beispiel C (Vergleich)

795,8 g einer 70 gew.-%igen Lösung von Sorbit in Wasser und 1046,2 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 2133,9 g Sojaöl und 9,1 g Imidazol zugegeben. Luft wurde gegen Stickstoff durch dreimaliges Aufdrücken von Stickstoff auf 5 bar und anschließendes Entspannen auf Normaldruck ausgetauscht. Die Temperatur wurde auf 110 °C erhöht und 2271 g Propylenoxid wurden über einen Zeitraum von 13,42 h und Rühren mit 450 U / min. eindosiert. Nach einer Nachreaktionszeit von 3,18 h wurde das Produkt 0,5 h im Vakuum bei 110 °C ausgeheizt, nach Abkühlen auf 80 °C wurden 2,977 g Irganox® 1076 zugegeben. Die OH-Zahl des Produktes betrug 407 mg KOH/g und die Viskosität bei 25°C 28620 mPas. 1,8 % der eingesetzten Saccharosemenge blieben unreagiert zurück.

### Beispiel D (Vergleich)

796,5 g einer 70 gew.-%igen Lösung von Sorbit in Wasser und 1049,2 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 2135,6 g Sojaöl und 9,1 g Imidazol zugegeben. Luft wurde gegen Stickstoff durch dreimaliges Aufdrücken von Stickstoff auf 5 bar und anschließendes Entspannen auf Normaldruck ausgetauscht. Die Temperatur wurde auf 110 °C erhöht und 1137,8 g Propylenoxid wurden über einen Zeitraum von 9,95 h dosiert; weitere 1135,5 g Propylenoxid wurden über einen Zeitraum von 3,35 h eindosiert. Die Rührerdrehzahl betrug 450 U / min. Nach einer Nachreaktionszeit von 1,88 h wurde das Produkt 0,5 h im Vakuum bei 110 °C ausgeheizt, nach Abkühlen auf 80 °C wurden 3,005 g Irganox® 1076 zugegeben. Die OH-Zahl des Produktes betrug 383,5 mg KOH/g und die Viskosität bei 25°C 19260 mPas. 5,1 % der eingesetzten Saccharosemenge blieben unreagiert zurück.

### Beispiel E (Vergleich)

798,1 g einer 70 gew.-%igen Lösung von Sorbit in Wasser und 523,8 g Saccharose wurden in einen 101 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 2135,9 g Sojaöl und 9 g Imidazol zugegeben. Luft wurde gegen Stickstoff durch dreimaliges Aufdrücken von Stickstoff auf 5 bar und anschließendes Entspannen auf Normaldruck ausgetauscht. Die Temperatur wurde auf 110 °C erhöht und 880 g Propylenoxid wurden über einen Zeitraum von 5,32 h und Rühren mit 450 U / min. eindosiert. Nach einer Nachreaktionszeit von 2,05 h wurde auf 50 °C abgekühlt und 523,5 g Saccharose wurden zugegeben. Nach erneutem dreimaligen Austausch von Luft gegen Stickstoff wurde wieder auf 110 °C aufgeheizt und 1391 g Propylenoxid wurden über einen Zeitraum von 8,38 h bei einer Rührerdrehzahl von 450 U / min. eindosiert. Nach einer Nachreaktionszeit von 2,67 h wurde das Produkt 0,5 h im Vakuum bei 110 °C ausgeheizt, nach Abkühlen auf 80 °C wurden 3,024 g Irganox® 1076 zugegeben. Die OH-Zahl des Produktes betrug 374 mg KOH/g und die Viskosität bei 25°C 18090 mPas. 7,02 % der eingesetzten Saccharosemenge blieben unreagiert zurück.

### Beispiel F (Vergleich)

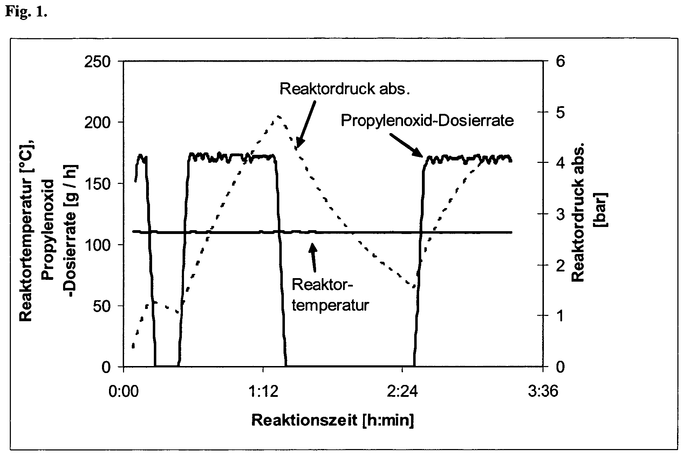

719,8 g einer 70 gew.-%igen Lösung von Sorbit in Wasser und 946,7 g Saccharose wurden in einen 101 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 9,0 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 1135,5 g Propylenoxid wurden über einen Zeitraum von insgesamt 8,13 h und Rühren mit 450 U / min. eindosiert. Aufgrund der schlechten Propylenoxidaufnahme zu Beginn der Dosierphase musste die Propylenoxiddosierung zweimal unterbrochen werden. Nach einer Nachreaktionszeit von 1,38 h wurde auf 50 °C abgekühlt und 2176,2 g Sojaöl wurden zugegeben. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 1135,5 g Propylenoxid wurden über einen Zeitraum von 6,67 h und Rühren mit 450 U / min. eindosiert. Nach einer Nachreaktionszeit von 3,82 h wurde das Produkt 0,5 h im Vakuum bei 110 °C ausgeheizt, nach Abkühlen auf 80 °C wurden 3,006 g Irganox® 1076 zugegeben. Die OH-Zahl des Produktes betrug 383,3 mg KOH/g und die Viskosität bei 25°C 19360 mPas. 0,02 % der eingesetzten Saccharosemenge blieben unreagiert zurück. Das Dosier-, das Druck- und das Temperaturprofil der Anfangsphase der Reaktion sind in Fig. 1. wiedergegeben.

### Beispiel G

717,5 g einer 70 gew.-%igen Lösung von Sorbit in Wasser und 941,7 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 604,6 g des Produktes aus Beispiel C, 1917,2 g Sojaöl und 8,12 g Imidazol zugegeben. Luft wurde gegen Stickstoff durch dreimaliges Aufdrücken von Stickstoff auf 5 bar und anschließendes Entspannen auf Normaldruck ausgetauscht. Die Temperatur wurde auf 110 °C erhöht und 2043,9 g Propylenoxid wurden über einen Zeitraum von 13,37 h und Rühren mit 450 U / min. eindosiert. Nach einer Nachreaktionszeit von 2,88 h wurde das Produkt 0,5 h im Vakuum bei 110 °C ausgeheizt, nach Abkühlen auf 80 °C wurden 3,014 g Irganox® 1076 zugegeben. Die OH-Zahl des Produktes betrug 375 mg KOH/g und die Viskosität bei 25°C 21100 mPas. 0,8 % der eingesetzten Saccharosemenge blieben unreagiert zurück.

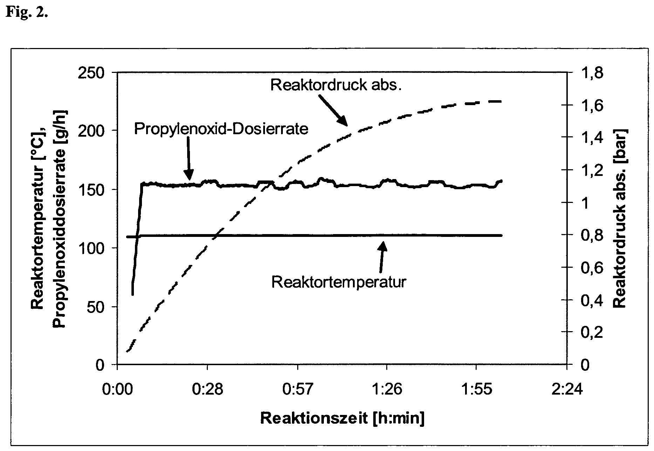

Das Dosier-, das Druck- und das Temperaturprofil der Anfangsphase der Reaktion sind in Fig. 2. wiedergegeben.

### Beispiel H

717,5 g einer 70 Gew.-%igen Lösung von Sorbit in Wasser und 941,7 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeitraum von 2 h gehalten war. Nach Abkühlen auf 50 °C wurden 605,6 g des Produktes aus Beispiel C und 8,18 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 1022,0 g Propylenoxid wurden über einen Zeitraum von 6,77 h und Rühren mit 450 U / min. eindosiert. Nach einer Nachreaktionszeit von 1,1 h wurde auf 50 °C abgekühlt und 1920,1 g Sojaöl wurden zugegeben. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 1021,9 g Propylenoxid über einen Zeitraum von 6,72 h und Rühren mit 450 U / min. eindosiert. Nach einer Nachreaktionszeit von 2,7 h wurde das Produkt 0,5 h im Vakuum bei 110 °C ausgeheizt, nach Abkühlen auf 80 °C wurden 3,03 g Irganox® 1076 zugegeben. Die OH-Zahl des Produktes betrug 384 mg KOH/g und die Viskosität bei 25°C 20600 mPas. 0,02 % der eingesetzten Saccharosemenge blieben unreagiert zurück.

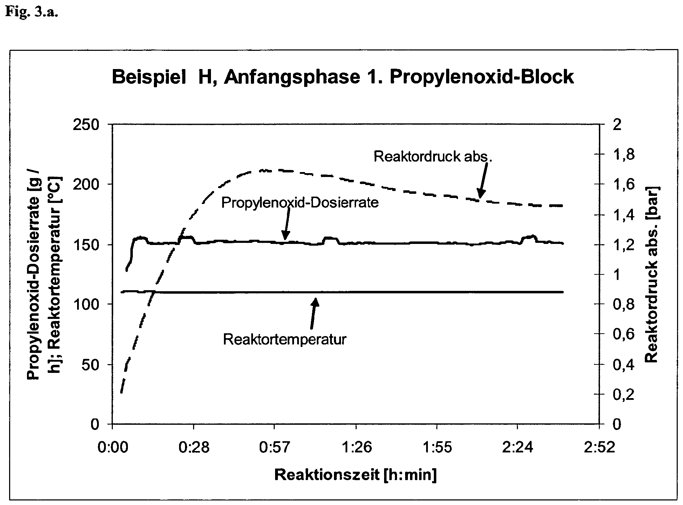

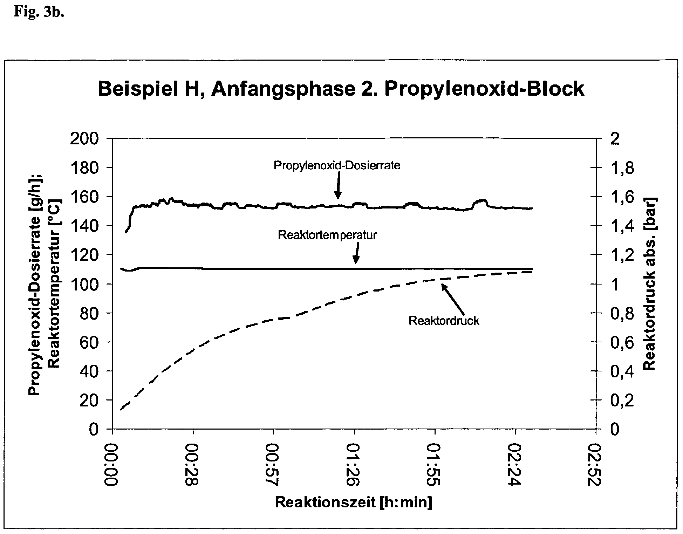

Die Dosier-, Druck- und Temperaturprofile der Anfangsphasen der beiden Propylenoxiddosierblöcke der Reaktion sind in den in Abb. 3. a. und b. wiedergegeben.

### Beispiel I

718,8 g einer 70 gew.-%igen Lösung von Sorbit in Wasser und 941,9 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 604,7 g des Produktes aus Beispiel H und 8,13 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 1010,0 g Propylenoxid wurden über einen Zeitraum von 6,6 h und Rühren mit 450 U / min. eindosiert. Nach einer Nachreaktionszeit von 1,25 h wurde auf 50 °C abgekühlt und 1913,9 g Sojaöl wurden zugegeben.. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 1010,0 g Propylenoxid über einen Zeitraum von 7,05 h und Rühren mit 450 U / min. eindosiert. Nach einer Nachreaktionszeit von 3 h wurde das Produkt 0,5 h im Vakuum bei 110 °C ausgeheizt, nach Abkühlen auf 80 °C wurden 3,01 g Irganox® 1076 zugegeben. Die OH-Zahl des Produktes betrug 399 mg KOH/g und die Viskosität bei 25°C 20300 mPas. 0,05 % der eingesetzten Saccharosemenge blieben unreagiert zurück.

### Beispiel K

759,2 g einer 70 gew.-%igen Lösung von Sorbit in Wasser und 941,8 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 300,4 g des Produktes aus Beispiel I und 9,02 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 1069,2 g Propylenoxid wurden über einen Zeitraum von 6,8 h und Rühren mit 450 U / min. eindosiert. Nach einer Nachreaktionszeit von 2,47 h wurde auf 50 °C abgekühlt und 2028,4 g Sojaöl wurden zugegeben.. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 1069,2 g Propylenoxid über einen Zeitraum von 6,82 h und Rühren mit 450 U / min. eindosiert. Nach einer Nachreaktionszeit von 2,4 h wurde das Produkt 0,5 h im Vakuum bei 110 °C ausgeheizt, nach Abkühlen auf 80 °C wurden 2,995 g Irganox® 1076 zugegeben. Die OH-Zahl des Produktes betrug 388,6 mg KOH/g und die Viskosität bei 25°C 19550 mPas. 0,18 % der eingesetzten Saccharosemenge blieben unreagiert zurück.

### Beispiel L

758,7 g einer 70 gew.-%igen Lösung von Sorbit in Wasser und 996,7 g Saccharose wurden in einen 10 1 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 301,2 g des Produktes aus Beispiel K und 9,01 g Imidazol zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 1073,5 g Propylenoxid wurden über einen Zeitraum von 6,53 h und Rühren mit 450 U / min. eindosiert. Nach einer Nachreaktionszeit von 1,33 h wurde auf 50 °C abgekühlt und 2031,4 g Sojaöl wurden zugegeben.. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 1073,5 g Propylenoxid über einen Zeitraum von 6,55 h und Rühren mit 450 U / min. eindosiert. Nach einer Nachreaktionszeit von 3,32 h wurde das Produkt 0,5 h im Vakuum bei 110 °C ausgeheizt, nach Abkühlen auf 80 °C wurden 3,022 g Irganox® 1076 zugegeben. Die OH-Zahl des Produktes betrug 388,0 mg KOH/g und die Viskosität bei 25°C 20800 mPas. 0,08 % der eingesetzten Saccharosemenge blieben unreagiert zurück.

### Beispiel M (Vergleich)

692,5 g einer 70 gew.-%igen Lösung von Sorbit in Wasser und 909,6 g Saccharose wurden in einen 101 Autoklaven gegeben. Das Wasser wurde bei 110 °C unter Rühren unter langsamer Absenkung des Druckes abdestilliert bis ein Druck von 10 mbar über einen Zeiraum von 2 h gehalten war. Nach Abkühlen auf 50 °C wurden 600,3 g des Produktes aus Beispiel H und 181,3 g des polymeren Alkoxylates zugegeben. Luft wurde gegen Stickstoff durch dreimaliges Aufdrücken von Stickstoff auf 5 bar und anschließenden Entspannen auf Normaldruck ausgetauscht. Die Temperatur wurde auf 110 °C erhöht und 987,3 g Propylenoxid wurden über einen Zeitraum von 4,08 h und Rühren mit 450 U / min. eindosiert. Nach einer Nachreaktionszeit von 2,1 h wurde auf 50 °C abgekühlt und 1865,2 g Sojaöl wurden zugegeben. Nach Verschließen des Reaktors wurde Luft gegen Stickstoff durch dreimaliges Aufdrücken von Stickstoff auf 5 bar und anschließendes Entspannen auf Normaldruck ausgetauscht. Nach erneutem Aufheizen auf 110 °C wurden 987,3 g Propylenoxid über einen Zeitraum von 4,08 h und Rühren mit 450 U / min. eindosiert. Nach einer Nachreaktionszeit von 6,3 h wurde das Produkt 0,5 h im Vakuum bei 110 °C ausgeheizt. Nach Abkühlen auf 80 °C wurden 296 g Rohprodukt zur Bestimmung des Anteils an unreagierter Saccharose entnommen. Zur im Autoklav verbliebenen Menge wurden 19,94 g einer 85 gew.-%igen Lösung von Milchsäure in Wasser gegeben und bei 80 °C 30 min. verrührt. Sodann wurden 2,996 g Irganox® 1076 zugegeben und ebenfalls bei 80 °C verrührt. Die OH-Zahl des Produktes betrug 380,5 mg KOH/g und die Viskosität bei 25°C 14500 mPas. 4,55 % der eingesetzten Zuckermenge blieben unreagiert zurück.

In Tabelle 1 sind die Versuchsergebnisse zusammengefasst:

**Tabelle 1.**

| Beispiel | Katalysator* | Propylenoxid-Dosierprofil | Unreagierte Saccharose [% der eingesetzten Saccharose] |
|---|---|---|---|
| A (Vergleich) | IM | glatt | 5,1 |
| B (Vergleich) | IM | glatt | 5,2 |
| C (Vergleich) | IM | glatt | 1,8 |
| D (Vergleich) | IM | glatt | 5,1 |
| E (Vergleich) | IM | glatt | 7,0 |
| F (Vergleich) | IM | Dosierunterbrechungen notwendig | 0,02 |
| G (erfinderisch) | IM | glatt | 0,8 |
| H (erfinderisch) | IM | glatt | 0,02 |
| I (erfinderisch) | IM | glatt | 0,05 |
| K (erfinderisch) | IM | glatt | 0,18 |
| L (erfinderisch) | IM | glatt | 0,08 |
| M (Vergleich) | KOH | glatt | 4,6 |

| | | | |
|---|---|---|---|
| * IM = Imidazol | | | |

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) ermittelt. Die Bestimmung des Gehaltes an nichtreagiertem Starter (Saccharose) erfolgte durch Lösen eine repräsentativen Probe (unter Rühren mit 450 U / min. entnommen) in Toluol, Filtration über eine Nutsche, Waschen des Filterkuchens mit Aceton, Trocknung des Filterkuchens bei 80 °C und Wägung.

### Verschäumungsbeispiele

### Eingesetzte Rohstoffe:

### Konv. Polyol A:

Polyetherpolyol auf Basis Propylenoxid; Starter: Saccharose, Ethylenglykol, Propylenglykol; OH-Zahl: 450 mg KOH/g; zahlenmittlere Funktionalität: 4,7

### Konv. Polyol B:

Polyetherpolyol auf Basis Propylenoxid; Starter: o-Toluoldiamin, OH-Zahl: 400 mg KOH/g

### Konv. Polyol C:

Polyetherpolyol auf Basis Propylenoxid; Starter: Ethylendiamin, OH-Zahl: 470 mg KOH/g

### Konv. Polyol D:

Polyetherpolyol auf Basis Propylenoxid; Starter: Propylenglykol, OH-Zahl: 112 mg KOH/g

### Katalysator 1:

Pentamethyldipropylendiamin

### Katalysator 2:

N,N-dimethylcyclohexylamin

### Tegostab B 8465®:

Schaumstabilisator auf Basis von Polyetherpolysiloxanen; Degussa Goldschmidt AG, 45127 Essen

### Herstellung der Polyolkomponente:

Polyole und Additive wurden gemäß den Mengenangaben (Gewichtsteile) in Tabelle 2 abgemischt.

**Tabelle 2**

| **Beispiel** | **→** | **1** | **2** | **3** |
|---|---|---|---|---|
| **Komponente ↓** | | (Vergleich) | | (Vergleich) |
| Konv. Polyol A | | 50 | - | - |
| Polyetherester aus Bsp. H | | - | 50 | - |
| Polyetherester aus Bsp. F aus EP 1923417 A1 | | - | - | 50 |
| Konv. Polyol B | | 30 | 30 | 30 |
| Konv. Polyol C | | 10 | 10 | 10 |
| Konv. Polyol D | | 10 | 10 | 10 |
| Wasser | | 2,2 | 2,2 | 2,2 |
| Tegostab B 8465® | | 1,5 | 1,5 | 1,5 |
| Katalysator 1 | | 0,5 | 0,5 | 0,5 |
| Katalysator 2 | | 0,85 | 0,85 | 0,85 |

Jeweils 100 Gewichtsteile der homogenen Polyolabmischungen aus Tabelle 2 wurden mit einem Treibmittelgemisch aus Cyclopentan und Isopentan (Cyclopentan / Isopentanverhältnis: 7:3) bei 20°C verrührt. In Tabelle 3 sind die maximalen Gewichtsverhältnisse von Treibmittel zu Polyolmischung angegeben, bei denen gerade noch keine Trübung zu beobachten ist. Bei Treibmittellöslichkeiten von mehr als 22 Gewichtsteilen Treibmittel in 100 Teilen Polyolformulierung wurde auf detailliertere Untersuchungen verzichtet.

**Tabelle 3**

| **Phasenverhalten von Mischungen aus Polyol und Treibmittel:** | | | |
|---|---|---|---|
| Treibmittelabmischung mit Polyolmischung gemäß Beispiel → | **1** (Vergleich) | **2** | **3** (Vergleich) |
| Treibmittel noch löslich bei Verhältnis Treibmittel / Polyol = | 16/100 | > 22 / 100 | > 22 / 100 |

Die Ergebnisse in Tabelle 2 zeigen, dass bei Verwendung von nicht nach der vorliegenden Erfindung bzw. nach EP 1923417 A1 hergestellten Polyolen als Formulierungskomponenten deutlich verringerte Treibmittellöslichkeiten zu beobachten sind. Bereits durch Zusatz kleiner Mengen erfindungsgemäß hergestellter Polyetherester bzw. nach EP 1923417 A1 hergestellter Polyetherester lassen sich signifikante Verbesserungen der Treibmittellöslichkeiten erzielen.

### Schäumbeispiele

100 Gewichtsteile Polyol gemischt mit 14 Gewichtsteilen Treibmittel (Cyclopentan / Isopentan im Verhältnis 7:3) wurden gemäß den Mengenangaben in Tabelle 4 mit Desmodur® 44 V 20 L (Bayer MaterialScience AG; polymeres MDI mit einem Isocyanatgehalt von 31,5 Gew.-%) bei 4200 U/min für 6-8 s verrührt. Die Kennzahl, definiert als (Mole Isocyanatgruppen / Mole isocyanatreaktive Gruppen) x 100, betrug in allen Fällen 113. Formen der Abmessung 22 cm x 22 cm x 10 cm bzw. 22 cm x 22 cm x 6 cm wurden mit dem Reaktionsgemisch in den in Tabelle 4 angegebenen Rohdichten gefüllt. Die Rohdichten wurden 10 % höher als die separat ermittelten Mindesteinfüllrohdichten gewählt. Die in der 10 cm dicken Form hergestellten Schaumstoffkörper wurden nach 4 min. Formverweilzeit aus der Form entnommen, ihre Nachquellung wurde 30 min. nach Entformung bestimmt. Aus den in der 6 cm dicken Form hergestellten Schaumstoffkörpern wurden Probekörper der Abmessung 20 cm x 20 cm x 3 cm zur Bestimmung der Wärmeleitzahlen gewonnnen. Die Wärmeleitzahlen wurden 2 h nach Herstellung der Schaumstoffe bei 23°C Schaumstoffmitteltemperatur ermittelt.

**Tabelle 4**

| **Rezepturen und Verschäumungsergebnisse:** | | | |
|---|---|---|---|
| Treibmittelabmischung mit Polyolabmischung aus Beispiel → | **1** (Vergleich) | **2** | **3** (Vergleich) |
| Desmodur® 44 V 20 L [Gew.-Tle] | 139 | 131 | 133 |
| Einfüllrohdichte [kg/m³] | 35,5 | 35,5 | 35,4 |
| Nachquellung [mm] | 1,6 | 1,6 | 3,3 |
| Wärmeleitzahl [mW/mK] | 22,3 | 22,2 | 22,2 |

Die Beispiele in Tabelle 4 zeigen, dass niedrige Nachquellungen von Formkörpern auch bei kurzen Formverweilzeiten gewährleistet bleiben und niedrige Wärmeleitzahlen erreicht werden, wenn Polyolformulierungen eingesetzt werden, die große Mengen der erfindungsgemäß hergestellten Polyetheresterpolyole enthalten.

## Patentansprüche

1. Verfahren zur Herstellung von Polyetheresterpolyolen, wobei Starterverbindungen mit Zerewitinoff-aktiven Wasserstoffatomen (a) mit wenigstens einem Alkylenoxid (b) in Gegenwart von wenigstens einem Amin (c) ausgewählt aus der Gruppe bestehend aus tertiären Aminen, unsubstituiertem Imidazol und substituiertem Imidazol, in Gegenwart von wenigstens einem Fettsäureester (d) umgesetzt werden, **dadurch gekennzeichnet, dass** die Zugabe von (d) vor, während oder nach der Dosierung von (b) erfolgt und vor der Dosierung der Komponente (b) ein Polyetheresterpolyol (e) in Mengen von 3,0 bis 20,0 Gew.-% bezogen auf alle Komponenten (a), (b), (c), (d) und (e) mit den Komponenten (a), (c) und ggf. (d) vermischt wird, wobei das Polyetheresterpolyol (e) eine OH-Zahl im Bereich zwischen 150 und 1150 mg KOH / g aufweist.

2. Verfahren nach Anspruch 1, **dadurch gekennzeichnet, dass** das Polyetheresterpolyol (e) in Mengen von 3,0 bis 20,0 Gew.-%, bevorzugt in Mengen von 5,0 bis 15,0 Gew.-% bezogen auf alle Komponenten (a), (b), (c), (d) und (e) eingesetzt wird.

3. Verfahren nach Anspruch 1 oder 2, **dadurch gekennzeichnet, dass** die Starterverbindungen (a) einen Schmelzpunkt im Bereich von 60 °C bis 400 °C, bevorzugt im Bereich zwischen 80 °C und 300 °C, besonders bevorzugt im Bereich zwischen 95 °C und 280°C, aufweisen, bzw. diese Verbindungen sich in diesen Temperaturbereichen zersetzen.

4. Verfahren nach einem oder mehreren der Ansprüche 1 bis 3, **dadurch gekennzeichnet, dass** die Komponente (a) ausgewählt wird aus der Gruppe bestehend aus Saccharose, Pentaerythrit, Sorbit, Trimethylolpropan, Bisphenol F, Bisphenol A, 1,3,5-Trihydroxybenzol, Isomere von Diaminotoluol, Isomere von Diaminodiphenylmethan, methylolgruppenhaltige Kondensate aus Formaldehyd und Phenol oder Melamin oder Harnstoff sowie Mannichbasen.

5. Verfahren nach einem oder mehreren der Ansprüche 1 bis 4, **dadurch gekennzeichnet, dass** die Komponente (b) ausgewählt wird aus der Gruppe bestehend aus Ethylenoxid, Propylenoxid, 1,2-Butylenoxid, 2,3-Butylenoxid und Styroloxid.

6. Verfahren nach einem oder mehreren der Ansprüche 1 bis 5, **dadurch gekennzeichnet, dass** die Komponente (c) ausgewählt wird aus der Gruppe bestehend aus N,N-Dimethylbenzylamin, Dimethylaminoethanol, Dimethylaminopropanol, N-Methyl-diethanolamin, Trimethylamin, N,N-Dimethylcyclohexylamin, N-Methylpyrrolidin, N,N,N',N'-Tetramethylethylendiamin, Diazabicyclo[2,2,2]octan, 1,4-Dimethylpiperazin, N-Methylmorpholin, unsubstituiertes Imidazol und alkylsubstituierte Imidazolderivate.

7. Verfahren nach einem oder mehreren der Ansprüche 1 bis 6, **dadurch gekennzeichnet, dass** die Komponente (d) in Form von Baumwollsaatöl, Erdnussöl, Kokosöl, Leinöl, Palmkernöl, Olivenöl, Maisöl, Palmöl, Rizinusöl, Lesquerella-Öl, Rapsöl, Sojaöl, Jatrophaöl, Sonnenblumenöl, Heringsöl, Sardinenöl oder Talg eingesetzt wird.

8. Verfahren nach einem oder mehreren der Ansprüche 1 bis 6, **dadurch gekennzeichnet, dass** die Komponente (d) als Fettsäureester auf Basis der Laurin-, Myristin-, Palmitin-, Stearin-, Palmitolein-, Öl-, Eruka-, Linol-, Linolen-, Elaeostearin- oder Acharidonsäure eingesetzt wird.

9. Verfahren nach einem oder mehreren der Ansprüche 1 bis 8, **dadurch gekennzeichnet, dass** die Dosierung der Komponente (b) und die Zugabe der Komponente (d) gleichzeitig erfolgen oder zunächst die Dosierung der Komponente (b) in Mengen von 10 bis 70 Gew.-% bezogen auf die Gesamtmenge der zu dosierenden Komponente (b), anschließend die Zugabe der Komponente (d) und anschließend die Dosierung der Komponente (b) in Mengen von 30 bis 90 Gew.-% bezogen auf die Gesamtmenge der zu dosierenden Komponente (b) erfolgt.

10. Verfahren nach einem oder mehreren der Ansprüche 1 bis 9, **dadurch gekennzeichnet, dass** das Polyetheresterpolyol (e) eine OH-Zahl im Bereich zwischen 200 und 1000 mg KOH / g, aufweist.

## Claims

1. A process for preparing polyether ester polyols comprising reacting starting compounds having Zerewitinoff-active hydrogen atoms (a) with at least one alkylene oxide (b) in the presence of at least one amine (c) selected from the group consisting of tertiary amines, unsubstituted imidazole and substituted imidazole, in the presence of at least one fatty acid ester (d), **characterized in that** (d) is added before, during, or after the metered addition of (b) and, before the metered addition of component (b), a polyether ester polyol (e) is mixed in an amount of from 3.0 to 20.0 weight %, based on all components (a), (b), (c), (d), and (e), with components (a), (c), and optionally (d), the polyether ester polyol (e) having an OH number between 150 and 1150 mg KOH/g.

2. The process of claim 1, **characterized in that** the polyether ester polyol (e) is used in an amount of from 3.0 to 20.0 weight %, preferably in an amount of from 5.0 to 15.0 weight %, based on all components (a), (b), (c), (d), and (e).

3. The process of claim 1 or 2, **characterized in that** the starting compounds (a) have a melting point in the range of from 60 °C to 400 °C, preferably in the range of from 80 °C to 300 °C, particularly preferably in the range of from 95 °C to 280 °C, or these compounds decompose in these temperature ranges.

4. The process of one or more of claims 1 to 3, **characterized in that** the component (a) is selected from the group consisting of saccharose, pentaerythritol, sorbitol, trimethylolpropane, bisphenol F, bisphenol A, 1,3,5-trihydroxybenzene, isomers of diaminotoluene, isomers of diaminodiphenylmethane, methylol-group-containing condensation products of formaldehyde and phenol, or melamine, or urea, and Mannich bases.

5. The process of one or more of claims 1 to 4, **characterized in that** the component (b) is selected from the group consisting of ethylene oxide, propylene oxide, 1,2-butylene oxide, 2,3-butylene oxide, and styrene oxide.

6. The process of one or more of claims 1 to 5, **characterized in that** the component (c) is selected from the group consisting of N,N-dimethylbenzylamine, dimethylaminoethanol, dimethylaminopropanol, N-methyldiethanolamine, trimethylamine, N,N-dimethylcyclohexylamine, N-methylpyrrolidine, N,N,N',N'-tetramethylethylenediamine, diazabicyclo[2,2,2]octane, 1,4-dimethylpiperazine, N-methylmorpholine, unsubstituted imidazole, and alkyl-substituted imidazole derivatives.

7. The process of one or more of claims 1 to 6, **characterized in that** the component (d) is used in the form of cottonseed oil, groundnut oil, coconut oil, linseed oil, palm-kernel oil, olive oil, corn oil, palm oil, castor oil, lesquerella oil, rape oil, soybean oil, jatropha oil, sunflower oil, herring oil, sardine oil, or tallow.

8. The process of one or more of claims 1 to 6, **characterized in that** the component (d) is used in the form of fatty acid esters based on lauric acid, myristic acid, palmitic acid, stearic acid, palmitoleic acid, oleic acid, erucic acid, linoleic acid, linolenic acid, elaeostearic acid or acharidonic acid.

9. The process of one or more of claims 1 to 8, **characterized in that** the metered addition of the component (b) and the addition of the component (d) take place simultaneously, or the metered addition of the component (b) in an amount of from 10 to 70 weight %, based on the total amount of the component (b) to be metered in, takes place first, followed by the addition of the component (d), which is followed by the metered addition of the component (b) in an amount of from 30 to 90 weight %, based on the total amount of the component (b) to be metered in.

10. The process of one or more of claims 1 to 9, **characterized in that** the polyether ester polyol (e) has an OH number between 200 and 1000 mg KOH/g.

## Revendications

1. Procédé de fabrication de polyéther-ester-polyols, selon lequel des composés de départ contenant des atomes d'hydrogène actifs selon Zerewitinoff (a) sont mis en réaction avec au moins un oxyde d'alkylène (b) en présence d'au moins une amine (c) choisie dans le groupe constitué par les amines tertiaires, un imidazole non substitué et un imidazole substitué, en présence d'au moins un ester d'acide gras (d), **caractérisé en ce que** l'ajout de (d) a lieu avant, pendant ou après l'introduction de (b) et, avant l'introduction du composant (b), un polyéther-ester-polyol (e) est mélangé en quantités de 3,0 à 20,0 % en poids, par rapport à tous les composants (a), (b), (c), (d) et (e), avec les composants (a), (c) et éventuellement (d), le polyéther-ester-polyol (e) présentant un indice OH dans la plage comprise entre 150 et 1 150 mg KOH/g.

2. Procédé selon la revendication 1, **caractérisé en ce que** le polyéther-ester-polyol (e) est utilisé en quantités de 3,0 à 20,0 % en poids, de préférence en quantités de 5,0 à 15,0 % en poids, par rapport à tous les composants (a), (b), (c), (d) et (e).

3. Procédé selon la revendication 1 ou 2, **caractérisé en ce que** les composés de départ (a) présentent un point de fusion dans la plage allant de 60 °C à 400 °C, de préférence dans la plage comprise entre 80 °C et 300 °C, de manière particulièrement préférée dans la plage comprise entre 95 °C et 280 °C, ou ces composés se décomposent dans ces plages de température.

4. Procédé selon une ou plusieurs des revendications 1 à 3, **caractérisé en ce que** le composant (a) est choisi dans le groupe constitué par le saccharose, la pentaérythrite, le sorbitol, le triméthylolpropane, le bisphénol F, le bisphénol A, le 1,3,5-trihydroxybenzène, les isomères de diaminotoluène, les isomères de diaminodiphénylméthane, les condensats contenant des groupes méthylol de formaldéhyde et de phénol ou de mélamine ou d'urée, ainsi que les bases de Mannich.

5. Procédé selon une ou plusieurs des revendications 1 à 4, **caractérisé en ce que** le composant (b) est choisi dans le groupe constitué par l'oxyde d'éthylène, l'oxyde de propylène, l'oxyde de 1,2-butylène, l'oxyde de 2,3-butylène et l'oxyde de styrène.

6. Procédé selon une ou plusieurs des revendications 1 à 5, **caractérisé en ce que** le composant (c) est choisi dans le groupe constitué par la N,N-diméthylbenzylamine, le diméthylaminoéthanol, le diméthylaminopropanol, la N-méthyl-diéthanolamine, la triméthylamine, la N,N-diméthylcyclohexylamine, la N-méthylpyrrolidine, la N,N,N',N'-tétraméthyléthylène-diamine, le diazabicyclo[2,2,2]octane, la 1,4-diméthylpipérazine, la N-méthylmorpholine, un imidazole non substitué et les dérivés d'imidazole à substitution alkyle.

7. Procédé selon une ou plusieurs des revendications 1 à 6, **caractérisé en ce que** le composant (d) est utilisé sous la forme d'huile de graine de coton, d'huile d'arachide, d'huile de coco, d'huile de lin, d'huile de palmiste, d'huile d'olive, d'huile de maïs, d'huile de palme, d'huile de ricin, d'huile de lesquerella, d'huile de colza, d'huile de soja, d'huile de jatropha, d'huile de tournesol, d'huile de hareng, d'huile de sardine ou de suif.

8. Procédé selon une ou plusieurs des revendications 1 à 6, **caractérisé en ce que** le composant (d) est utilisé sous la forme d'un ester d'acide gras à base d'acide laurique, myristique, palmitique, stéarique, palmitoléique, oléique, érucique, linoléique, linolénique, éléostéarique ou arachidonique.

9. Procédé selon une ou plusieurs des revendications 1 à 8, **caractérisé en ce que** l'introduction du composant (b) et l'ajout du composant (d) ont lieu simultanément, ou l'introduction du composant (b) en quantités de 10 à 70 % en poids, par rapport à la quantité totale du composant (b) à introduire, a tout d'abord lieu, puis l'ajout du composant (d) et enfin l'ajout du composant (b) en quantités de 30 à 90 % en poids, par rapport à la quantité totale du composant (b) à introduire, ont lieu.

10. Procédé selon une ou plusieurs des revendications 1 à 9, **caractérisé en ce que** le polyéther-ester-polyol (e) présente un indice OH dans la plage comprise entre 200 et 1 000 mg KOH/g.
